# FASCICULE DE BREVET EUROPEEN

(11) **EP 3 558 070 B1**
(45) Date de publication et mention de la délivrance du brevet: **19.05.2021**
(21) Numéro de dépôt: 17829250.4
(22) Date de dépôt: 18.12.2017
(51) Int. Cl.: A47J 27/04

(54) **ACCESSOIRE CUISEUR VAPEUR PERFECTIONNE POUR CHAUFFER ET/OU CUIRE A LA VAPEUR DES ALIMENTS CONTENUS DANS UN RECIPIENT**
VERBESSERTES DÄMPFERZUBEHÖR ZUM DAMPFERHITZEN UND/ODER DAMPFGAREN VON LEBENSMITTELN IN EINEM BEHÄLTER
IMPROVED STEAMER ACCESSORY FOR STEAM-HEATING AND/OR STEAM-COOKING FOOD IN A CONTAINER

(30) Priorité: 20.12.2016 FR 1662881
(43) Date de publication de la demande: 30.10.2019
(73) Titulaire: SEB S.A., 69130 Ecully (FR)
(72) Inventeur: BLOND, Laurent, 21200 Beaune (FR); GUEGAN, Laurent, 74150 Lornay (FR)
(74) Mandataire: SEB Développement
(86) Numéro de dépôt international: PCT/FR2017/053670
(87) Numéro de publication internationale: WO 2018/115697

(56) Documents cités:
- DE-A1- 10 043 771
- DE-A1-102008 036 683
- FR-A5- 2 161 447
- GB-A- 2 391 163

## Description

La présente invention concerne le domaine technique des appareils et dispositifs de production de vapeur pour chauffer et/ou cuire des aliments à la vapeur.

La présente invention concerne plus particulièrement les accessoires cuiseur vapeur pour chauffer et/ou cuire à la vapeur des aliments contenus dans un récipient.

La présente invention concerne également les appareils pour chauffer et/ou cuire à la vapeur des aliments, comportant un récipient associé à un dispositif de production de vapeur formant un tel accessoire cuiseur vapeur.

Il est connu du document US 6 530 308 un accessoire cuiseur vapeur comprenant un générateur de vapeur comportant une chambre de production de vapeur comportant un dispositif de chauffe, la chambre de production de vapeur étant reliée à au moins une sortie de distribution de vapeur ménagée dans une partie inférieure du générateur de vapeur. Cette disposition permet d'injecter de la vapeur dans une enceinte de cuisson disposée en dessous du générateur de vapeur. La chambre de production de vapeur est alimentée en eau par l'intermédiaire d'un dispositif de contrôle de gouttes. Toutefois ce dispositif requiert une action manuelle de la part de l'utilisateur pour modifier le débit de vapeur au cours de la cuisson.

Un objet de la présente invention est de proposer un accessoire cuiseur vapeur pouvant être utilisé avec un récipient pour chauffer et/ou cuire des aliments à la vapeur, qui présente de bonnes performances de production de vapeur, tout en limitant les dégagements de vapeur à l'extérieur.

Un autre objet de la présente invention est de proposer un accessoire cuiseur vapeur pouvant être utilisé avec un récipient pour chauffer et/ou cuire des aliments à la vapeur, qui soit d'une construction économique.

Un autre objet de la présente invention est de proposer un accessoire cuiseur vapeur pouvant être utilisé avec un récipient pour chauffer et/ou cuire des aliments à la vapeur, dont l'utilisation soit simple.

Ces objets sont atteints avec un accessoire cuiseur vapeur pour chauffer et/ou cuire à la vapeur des aliments contenus dans un récipient, l'accessoire cuiseur vapeur comprenant un générateur de vapeur comportant une chambre de production de vapeur reliée à au moins une sortie de distribution de vapeur ménagée dans une partie inférieure du générateur de vapeur, la chambre de production de vapeur comportant un dispositif de chauffe, du fait que le dispositif de chauffe est piloté par un dispositif de commande comportant un détecteur de vapeur agencé pour détecter un flux de vapeur s'échappant par un évent mettant en communication la partie inférieure du générateur de vapeur avec une partie extérieure du générateur de vapeur, que le générateur de vapeur présente une surface d'appui annulaire inférieure prévue pour reposer sur le récipient, que ladite au moins une sortie de distribution de vapeur est entourée par la surface d'appui annulaire inférieure, et que l'évent est entouré par la surface d'appui annulaire inférieure.

En d'autres termes, ledit évent forme un conduit ou un échappement permettant à la vapeur de passer de la partie inférieure du générateur de vapeur, prévue pour être placée au-dessus des aliments, à la partie extérieure du générateur de vapeur. Ces dispositions permettent de poser le générateur de vapeur sur le bord supérieur d'un récipient ou d'un adaptateur, et d'équilibrer la pression à l'intérieur du récipient fermé par le générateur de vapeur, tout en contrôlant l'échappement de vapeur hors du récipient fermé par le générateur de vapeur. Le dispositif de chauffe piloté par le dispositif de commande permet de réduire la puissance de chauffe après que le détecteur de vapeur a détecté un flux de vapeur sortant par ledit évent. Ces dispositions permettent d'adapter la quantité de vapeur à fournir en fonction de la taille du récipient utilisé et de la quantité d'aliments présente dans le récipient. Le générateur de vapeur peut être utilisé avec un récipient pour former une enceinte contenant les aliments à chauffer ou à cuire. Si désiré le générateur de vapeur peut comporter un dispositif de support amovible par rapport à la chambre de production de vapeur, de sorte que la chambre de production de vapeur repose sur ledit dispositif de support et que ledit dispositif de support présente au moins une portion de surface d'appui prévue pour reposer sur un récipient. En alternative un dispositif de support amovible peut être associé au générateur de vapeur pour former l'enceinte avec le récipient et le générateur de vapeur. Ainsi plusieurs tailles de récipient peuvent être utilisées avec l'accessoire cuiseur vapeur. Le dispositif de support amovible peut notamment présenter une configuration annulaire ou en U.

Avantageusement, le détecteur de vapeur s'étend à l'intérieur de l'évent et/ou forme une portion de paroi de l'évent. Cette disposition est bien adaptée aux détecteurs de vapeur prévus pour détecter la température.

Selon une forme de réalisation avantageuse, le détecteur de vapeur est formé par une résistance CTN ou par un interrupteur thermostatique.

Avantageusement, l'évent forme un conduit ascendant. Cette disposition permet de faciliter l'échappement de la vapeur.

Avantageusement encore, l'évent forme un conduit rectiligne. Cette disposition permet aussi de faciliter l'échappement de la vapeur.

Avantageusement encore, l'évent forme un conduit dépourvu de chicane. Cette disposition permet encore de faciliter l'échappement de la vapeur.

Avantageusement encore, la partie extérieure du générateur de vapeur s'étend au-dessus de la partie inférieure du générateur de vapeur. Cette disposition permet de simplifier la construction de l'accessoire cuiseur vapeur.

Avantageusement encore, l'accessoire cuiseur vapeur comprend un réservoir d'eau. Une telle réalisation est bien adaptée à un appareil domestique. Avantageusement encore, l'accessoire cuiseur vapeur comprend un réservoir d'eau alimentant en eau la chambre de production de vapeur. Cette disposition permet de chauffer une quantité d'eau plus réduite, ce qui favorise une obtention plus rapide de vapeur. En alternative, la chambre de production de vapeur pourrait comporter le réservoir d'eau. En d'autres termes, le dispositif de chauffe permet alors de chauffer le réservoir d'eau comme par exemple dans une bouilloire.

Selon un mode de réalisation, le réservoir d'eau est amovible par rapport au générateur de vapeur et le générateur de vapeur porte le réservoir d'eau amovible. Cette disposition permet de faciliter le remplissage du réservoir d'eau.

Avantageusement encore, le générateur de vapeur présente une paroi inférieure dans laquelle est formée ladite au moins une sortie de distribution de vapeur, et la chambre de production de vapeur est agencée dans le générateur de vapeur à distance de la paroi inférieure. Ces dispositions permettent de réaliser une chambre de distribution de vapeur sous la chambre de production de vapeur, ce qui permet plus de liberté dans l'agencement de la ou des sorties de distribution de vapeur.

Avantageusement encore, le générateur de vapeur présente une paroi latérale extérieure et la chambre de production de vapeur est agencée dans le générateur de vapeur à distance de la paroi latérale extérieure. Ces dispositions permettent de limiter la température de la paroi latérale extérieure du générateur de vapeur.

Avantageusement alors, l'évent débouche dans la paroi latérale extérieure. Cette disposition permet d'augmenter la taille de la zone de réception du réservoir d'eau lorsque le réservoir d'eau est amovible.

Ces objets sont également atteints avec un cuiseur vapeur électrique comportant un récipient pour contenir les aliments à chauffer et/ou à cuire, et un couvercle présentant une face inférieure prévue pour être disposée sur le récipient, du fait que le couvercle comprend un accessoire cuiseur vapeur selon l'une au moins des caractéristiques précitées. Ainsi l'enceinte définie par le couvercle et le récipient peut être d'abord alimentée en vapeur avec un débit de vapeur élevé, pour élever la température des aliments préalablement placés dans le récipient. L'évent permet d'évacuer l'air lors du remplissage de l'enceinte par la vapeur. Lorsque les aliments sont saturés en vapeur, la vapeur s'échappe par l'évent avec un débit de plus en plus important, qui peut être détecté par le détecteur de vapeur. La puissance de chauffe du dispositif de chauffe peut alors être diminuée automatiquement, ce qui permet d'éviter des rejets de vapeur excessifs et aussi de pouvoir chauffer ou cuire plus longtemps avec une même quantité d'eau initiale. Si désiré le couvercle peut comporter un dispositif de support amovible par rapport à la chambre de production de vapeur de l'accessoire cuiseur vapeur, de sorte que la chambre de production de vapeur repose sur ledit dispositif de support et que ledit dispositif de support présente au moins une portion de surface d'appui prévue pour reposer sur un récipient.

L'invention sera mieux comprise à l'étude de deux exemples de réalisation, pris à titre nullement limitatif, illustrés dans les figures 1 à 4 annexées, dans lesquelles :
- la figure 1 annexée est une vue schématique en élévation et en coupe d'un premier exemple de réalisation d'un cuiseur vapeur électrique comportant un accessoire cuiseur vapeur selon l'invention,
- la figure 2 est une vue en perspective éclatée et en coupe d'un deuxième exemple de réalisation d'un cuiseur vapeur électrique comportant un accessoire cuiseur vapeur selon l'invention,
- la figure 3 est une vue en perspective et en coupe de l'accessoire cuiseur vapeur illustré sur la figure 1, selon une autre orientation,
- la figure 4 est une vue en perspective et en coupe de l'accessoire cuiseur vapeur illustré sur les figures 2 et 3, selon une autre section de coupe.

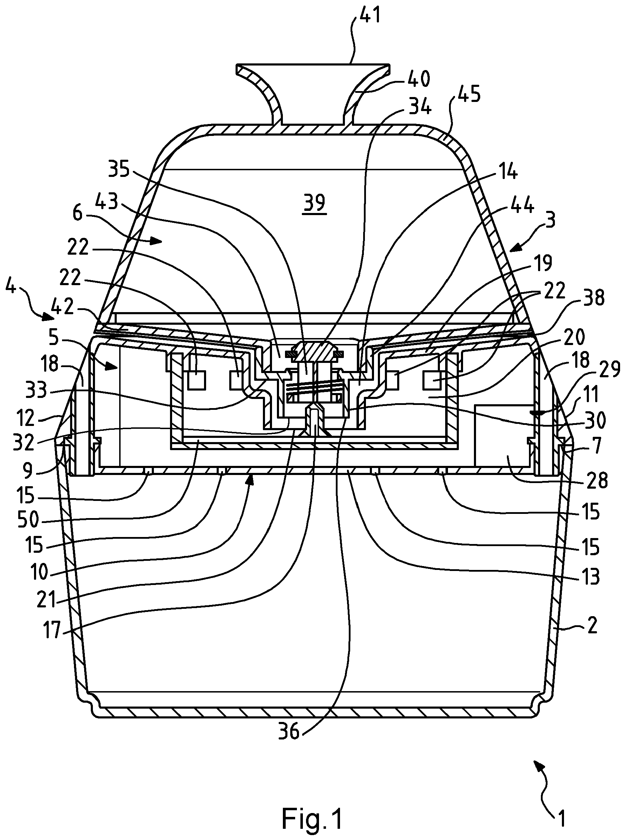

Le cuiseur vapeur électrique 1 illustré de manière schématique sur la figure 1 est un appareil pour chauffer et/ou cuire à la vapeur des aliments, comportant un récipient 2 pour contenir les aliments à chauffer et/ou à cuire, et un couvercle 3 prévu pour reposer sur le récipient 2. A cet effet, le couvercle 3 présente une face inférieure 7 prévue pour être disposée sur le récipient 2.

Le couvercle 3 comprend un accessoire cuiseur vapeur 4 pour chauffer et/ou cuire à la vapeur des aliments contenus dans le récipient 2.

Plus particulièrement dans l'exemple de réalisation illustré sur la figure 1, le couvercle 3 forme un accessoire cuiseur vapeur 4 pour chauffer et/ou cuire à la vapeur des aliments contenus dans le récipient 2. A titre de variante, le couvercle 3 peut notamment comporter un dispositif de support, si désiré amovible, prévu pour porter l'accessoire cuiseur vapeur 4, et pour reposer sur le récipient 2.

L'accessoire cuiseur vapeur 4 comprend un générateur de vapeur 5 et un réservoir d'eau 6. Le réservoir d'eau 6 est amovible par rapport au générateur de vapeur 5 et le générateur de vapeur 5 porte le réservoir d'eau 6 amovible. Le générateur de vapeur 5 comporte une entrée d'admission d'eau 14 alimentée en eau par le réservoir d'eau 6 disposé sur le générateur de vapeur 5. Le générateur de vapeur 5 comporte une chambre de production de vapeur 20. Le réservoir d'eau 6 alimente en eau la chambre de production de vapeur 20. A cet effet la chambre de production de vapeur 20 présente une entrée d'alimentation en eau 21 alimentée en eau par le réservoir d'eau 6 disposé sur le générateur de vapeur 5. La chambre de production de vapeur 20 comporte un dispositif de chauffe 50 pour transformer en vapeur l'eau présente dans la chambre de production de vapeur 20. La chambre de production de vapeur 20 présente au moins une sortie d'évacuation de vapeur 22. La chambre de production de vapeur 20 est reliée à au moins une sortie de distribution de vapeur 15 ménagée dans une partie inférieure 10 du générateur de vapeur 5.

Plus particulièrement, le générateur de vapeur 5 présente une surface d'appui annulaire inférieure 9 prévue pour reposer sur le récipient 2. L'entrée d'admission d'eau 14 du générateur de vapeur 5 est agencée dans une face supérieure 19 du générateur de vapeur 5. L'entrée d'admission d'eau 14 forme un entonnoir. L'entrée d'admission d'eau 14 débouche dans l'entrée d'alimentation en eau 21 de la chambre de production de vapeur 20. Le générateur de vapeur 5 présente une paroi inférieure 13 dans laquelle est formée ladite au moins une sortie de distribution de vapeur 15. Tel que visible sur la figure 1, ladite au moins une sortie de distribution de vapeur 15 est ainsi entourée par la surface d'appui annulaire inférieure 9. Le générateur de vapeur 5 présente au moins un évent 18 mettant en communication la partie inférieure 10 du générateur de vapeur 5 avec une partie extérieure 11 du générateur de vapeur 5 s'étendant au-dessus de la partie inférieure 10. Ledit au moins un évent 18 est entouré par la surface d'appui annulaire inférieure 9. Le générateur de vapeur 5 présente une paroi latérale extérieure 12 s'étendant en dessous du réservoir d'eau 6 disposé sur le générateur de vapeur 5. Ledit au moins un évent 18 débouche dans la paroi latérale extérieure 12.

Le dispositif de chauffe 50 est piloté par un dispositif de commande 28 comportant un détecteur de vapeur 29 agencé pour détecter un flux de vapeur s'échappant par l'un des évents 18. Le dispositif de commande 28 permet de réduire la puissance de chauffe du dispositif de chauffe 50 lorsque de la vapeur a été détectée par le détecteur de vapeur 29.

Dans l'exemple de réalisation illustré sur la figure 1, le détecteur de vapeur 29 est agencé dans l'un des évents 18. Le détecteur de vapeur 29 est avantageusement formé par une résistance CTN. Le dispositif de commande 28, représenté schématiquement sur la figure 1, comprend un microprocesseur avantageusement agencé à distance de la résistance CTN.

Dans l'exemple de réalisation illustré sur la figure 1, le dispositif de chauffe 50 est agencé dans le fond de la chambre de production de vapeur 20. Le dispositif de chauffe 50 peut notamment comporter un élément chauffant sérigraphié, ou un élément chauffant blindé disposé sous une plaque de diffusion de chaleur et/ou dans une plaque de diffusion de chaleur. A titre de variante, le dispositif de chauffe 50 pourrait notamment être agencé à l'intérieur de la chambre de production de vapeur 20.

Selon une forme de réalisation préférée, la chambre de production de vapeur 20 présente au moins une sortie d'évacuation de vapeur 22 disposée plus haut que l'entrée d'alimentation en eau 21, ladite au moins une sortie d'évacuation de vapeur 22 communiquant avec ladite au moins une sortie de distribution de vapeur 15.

Dans l'exemple de réalisation illustré sur la figure 1, la chambre de production de vapeur 20 présente plusieurs sorties d'évacuation de vapeur 22 disposées plus haut que l'entrée d'alimentation en eau 21 et communiquant avec les sorties de distribution de vapeur 15. La chambre de production de vapeur 20 est agencée dans le générateur de vapeur 5 à distance de la paroi inférieure 13, ce qui permet une plus grande liberté dans la position des sorties de distribution de vapeur 15. La chambre de production de vapeur 20 est agencée dans le générateur de vapeur 5 à distance de la paroi latérale extérieure 12.

Dans l'exemple de réalisation illustré sur la figure 1, le générateur de vapeur 5 présente plusieurs évents 18 mettant en communication la partie inférieure 10 du générateur de vapeur 5 avec la partie extérieure 11 du générateur de vapeur 5. La partie inférieure 10 forme la paroi inférieure 13. La partie extérieure 11 forme la paroi latérale extérieure 12.

Le réservoir d'eau 6 comporte une sortie d'écoulement 32 alimentant en eau le générateur de vapeur 5.

Dans l'exemple de réalisation illustré sur la figure 1, l'accessoire cuiseur vapeur 4 comporte au moins un passage d'air 38 mettant en communication la sortie d'écoulement 32 avec l'extérieur lorsque le réservoir d'eau 6 est disposé sur le générateur de vapeur 5. Tel que bien visible sur la figure 1, ledit au moins un passage d'air 38 est ménagé entre le réservoir d'eau 6 et le générateur de vapeur 5, plus particulièrement entre une face inférieure 33 du réservoir d'eau 6 et la face supérieure 19 du générateur de vapeur 5. Le réservoir d'eau 6 et/ou le générateur de vapeur 5 peuvent présenter à cet effet des entretoises (non représentées sur la figure 1) pour écarter la face inférieure 33 du réservoir d'eau 6 de la face supérieure 19 du générateur de vapeur 5. A titre de variante, ledit au moins un passage d'air 38 peut notamment être ménagé dans le réservoir d'eau 6 et/ou dans le générateur de vapeur 5.

Dans l'exemple de réalisation illustré sur la figure 1, la sortie d'écoulement 32 est agencée dans la face inférieure 33 du réservoir d'eau 6. La partie inférieure du réservoir d'eau 6 repose sur la partie supérieure du générateur de vapeur 5.

Plus particulièrement, la sortie d'écoulement 32 s'étend au-dessus de l'entrée d'alimentation en eau 21 de la chambre de production de vapeur 20. La sortie d'écoulement 32 présente un clapet 34 mobile entre une position d'obturation dans laquelle la sortie d'écoulement 32 est obturée et une position d'écoulement dans laquelle la sortie d'écoulement 32 autorise l'écoulement de l'eau hors du réservoir d'eau 6. De préférence, le réservoir d'eau 6 comporte au moins une surface d'appui 36 s'étendant en dessous du clapet 34 disposé en position d'obturation, pour prévenir les actionnements intempestifs du clapet 34. Selon une forme de réalisation préférée, le clapet 34 est entouré par un conduit 30 s'étendant en dessous du clapet 34 disposé en position d'obturation.

Dans l'exemple de réalisation illustré sur la figure 1, le générateur de vapeur 5 présente un ergot 17 repoussant le clapet 34 vers la position d'écoulement lorsque le réservoir d'eau 6 est disposé sur le générateur de vapeur 5. Tel que visible sur la figure 1, l'ergot 17 est agencé dans la chambre de production de vapeur 20. Le clapet 34 est mobile selon une direction principalement verticale. Le clapet 34 est repoussé vers la position d'obturation par un élément de rappel élastique 35. L'élément de rappel élastique 35 est avantageusement formé par un ressort hélicoïdal. La surface d'appui 36 est formée par la sortie d'écoulement 32. A titre de variante, le clapet 34 peut présenter un ergot repoussé par la chambre de production de vapeur 20 lorsque le réservoir d'eau 6 est disposé sur le générateur de vapeur 5.

Selon une forme de réalisation préférée, le réservoir d'eau 6 peut être positionné sur le générateur de vapeur 5 selon plusieurs orientations angulaires. Dans l'exemple de réalisation illustré sur la figure 1, le réservoir d'eau 6 peut être positionné sur le générateur de vapeur 5 sans indexation particulière. Plus particulièrement, l'entrée d'admission d'eau 14 est agencée dans la partie centrale de la face supérieure 19 du générateur de vapeur 5.

Selon une forme de réalisation préférée, le réservoir d'eau 6 comporte un organe de préhension 40. Dans l'exemple de réalisation illustré sur la figure 1, l'organe de préhension 40 est agencé à l'opposé de la sortie d'écoulement 32. L'organe de préhension 40 présente une surface d'appui 41 prévue pour porter le réservoir d'eau 6 lorsque le réservoir d'eau 6 est disposé en position retournée.

Le réservoir d'eau 6 peut être réalisé en deux parties assemblées, si désiré démontables, notamment pour le remplissage et/ou pour le nettoyage. Dans l'exemple de réalisation illustré sur la figure 1, la face inférieure 33 du réservoir d'eau 6 est formée par une base 42 comportant un orifice 43 autour duquel est monté un bouchon 44 présentant la sortie d'écoulement 32. Le bouchon 44 loge le clapet 34. Un corps 45 est monté sur la base 42. L'organe de préhension 40 est issu du corps 45. Le corps 45 peut être assemblé de manière démontable ou non avec la base 42. A titre de variante, l'organe de préhension 40 peut notamment être issu de la base 42, ou être rapporté ou fixé sur le corps 45 ou sur la base 42. Le réservoir d'eau 6 peut comporter un orifice de remplissage distinct de la sortie d'écoulement 32. Si désiré, l'orifice de remplissage peut être obturé.

Le cuiseur vapeur électrique 1 et l'accessoire cuiseur vapeur 4 illustrés sur la figure 1 fonctionnent et s'utilisent de la manière suivante.

L'utilisateur remplit d'abord le réservoir d'eau 6, par exemple en retirant la base 42 du corps 45 après avoir retourné le réservoir d'eau 6. L'utilisateur replace ensuite la base 42 sur le corps 45 et retourne à nouveau le réservoir d'eau 6 pour positionner le réservoir d'eau 6 sur le générateur de vapeur 5. La sortie d'écoulement 32 du réservoir d'eau 6 s'étend alors dans l'entrée d'admission d'eau 14 du générateur de vapeur 5. Le clapet 34 est repoussé vers la position d'écoulement par le générateur de vapeur 5 lorsque le réservoir d'eau 6 est disposé sur le générateur de vapeur 5. L'ergot 17 s'étend alors à l'intérieur du conduit 30 et repousse le clapet 34 vers la position d'écoulement, de sorte que l'eau issue de la sortie d'écoulement 32 du réservoir d'eau 6 s'écoule dans l'entrée d'admission d'eau 14 du générateur de vapeur 5 pour atteindre la sortie d'écoulement 32 du réservoir d'eau 6. Le niveau d'eau monte dans la chambre de production de vapeur 20 jusqu'à atteindre la sortie d'écoulement 32. Le réservoir d'eau 6 disposé sur le générateur de vapeur 5 forme une chambre fermée 39 au-dessus de la sortie d'écoulement 32. L'eau ne peut s'écouler hors du réservoir d'eau 6 que si de l'air prend sa place. A cet effet la sortie d'écoulement 32 communiquant avec l'extérieur de l'accessoire cuiseur vapeur 4 par le passage d'air 38 permet que de l'air rentre dans le réservoir d'eau 6, tant que le niveau de l'eau n'atteint pas la sortie d'écoulement 32.

L'utilisateur met alors en marche le dispositif de chauffe 50. La température de l'eau présente dans la chambre de production de vapeur 20 s'élève jusqu'à ce que de la vapeur soit produite. La vapeur s'échappe alors par les sorties d'évacuation de vapeur 22 pour atteindre les sorties de distribution de vapeur 15 et se répandre dans le récipient 2 pour cuire ou chauffer les aliments présents dans le récipient 2. La production de vapeur entraîne une diminution du niveau de l'eau présente dans la chambre de production de vapeur 20 en dessous de la sortie d'écoulement 32, ce qui permet une réalimentation de la chambre de production de vapeur 20 en eau. L'eau peut alors s'écouler du réservoir d'eau 6 par la sortie d'écoulement 32, jusqu'à ce que le niveau de l'eau atteigne la sortie d'écoulement 32, de l'air provenant de l'extérieur de l'accessoire cuiseur vapeur 4 passant par le passage d'air 38 pour entrer par la sortie d'écoulement 32 dans le réservoir d'eau 6. Les aliments commencent à absorber la vapeur pour élever leur température. L'air peut s'échapper par le ou les évents 18. Lorsque les aliments sont suffisamment saturés en vapeur, la vapeur commence par s'échapper par les évents. La vapeur s'échappant peut alors être détectée par le détecteur de vapeur 29 agencé dans l'un des évents 18. La puissance de chauffe du dispositif de chauffe 50 peut alors être réduite de manière automatique par le dispositif de commande 28.

Le réservoir d'eau 6 alimente en eau la chambre de production de vapeur 20 par gravité. En d'autres termes, l'eau s'écoule du réservoir d'eau 6 pour alimenter la chambre de production de vapeur 20.

A titre de variante, le réservoir d'eau 6 ne comporte pas nécessairement un clapet 34. La sortie d'écoulement 32 du réservoir d'eau 6 peut notamment être calibrée pour que le débit d'eau entrant dans la chambre de production de vapeur 20 permette la vaporisation de l'eau présente dans la chambre de production de vapeur 20 sans que de l'eau ne déborde de la chambre de production de vapeur 20.

A titre de variante, l'entrée d'admission d'eau 14 et l'entrée d'alimentation en eau 21 peuvent être confondues.

A titre de variante, le réservoir d'eau 6 peut être verrouillé par baïonnette sur le générateur de vapeur 5. A cet effet le réservoir d'eau 6 peut par exemple comporter des pattes prévues pour un accrochage par rotation avec le générateur de vapeur, ou vice-versa.

A titre de variante, l'accessoire cuiseur vapeur 4 peut comporter une pompe pour contrôler l'écoulement de l'eau hors du réservoir d'eau 6 afin d'alimenter la chambre de production de vapeur 20. Pour simplifier les connexions électriques, la pompe peut être avantageusement disposée dans le générateur de vapeur 5.

Si désiré le générateur de vapeur 5 peut comporter un dispositif de support amovible par rapport à la chambre de production de vapeur 20, de sorte que la chambre de production de vapeur 20 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 3.

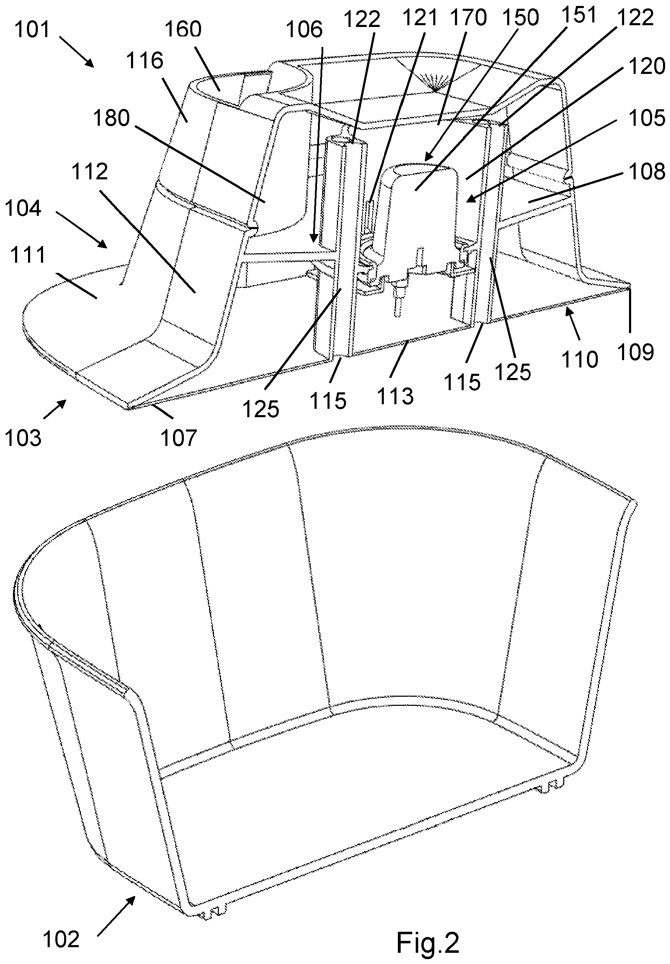

Le cuiseur vapeur électrique 101 illustré de manière schématique sur la figure 2 est un appareil pour chauffer et/ou cuire à la vapeur des aliments, comportant un récipient 102 pour contenir les aliments à chauffer et/ou à cuire, et un couvercle 103 prévu pour reposer sur le récipient 102. A cet effet, le couvercle 103 présente une face inférieure 107 prévue pour être disposée sur le récipient 102.

Le couvercle 103 comprend un accessoire cuiseur vapeur 104 pour chauffer et/ou cuire à la vapeur des aliments contenus dans le récipient 102.

Plus particulièrement dans l'exemple de réalisation illustré sur les figures 2 à 4, le couvercle 103 forme un accessoire cuiseur vapeur 104 pour chauffer et/ou cuire à la vapeur des aliments contenus dans le récipient 102. A titre de variante, le couvercle 103 peut notamment comporter un dispositif de support, si désiré amovible, prévu pour porter l'accessoire cuiseur vapeur 104, et pour reposer sur le récipient 102.

L'accessoire cuiseur vapeur 104 comprend un générateur de vapeur 105 et un réservoir d'eau 106. Le réservoir d'eau 106 communique avec l'extérieur par un orifice de remplissage 160. Si désiré, le réservoir d'eau 106 peut présenter au moins un autre orifice de remplissage.

Le générateur de vapeur 105 comporte une chambre de production de vapeur 120. Le réservoir d'eau 106 alimente en eau la chambre de production de vapeur 120 par gravité. A cet effet le réservoir d'eau 106 communique par une entrée d'alimentation en eau 121 avec la chambre de production de vapeur 120. Si désiré le réservoir d'eau 106 peut communiquer avec la chambre de production de vapeur 120 par au moins une autre entrée d'alimentation en eau.

De préférence, le réservoir d'eau 106 présente un fond 108 déversant vers l'entrée d'alimentation en eau 121.

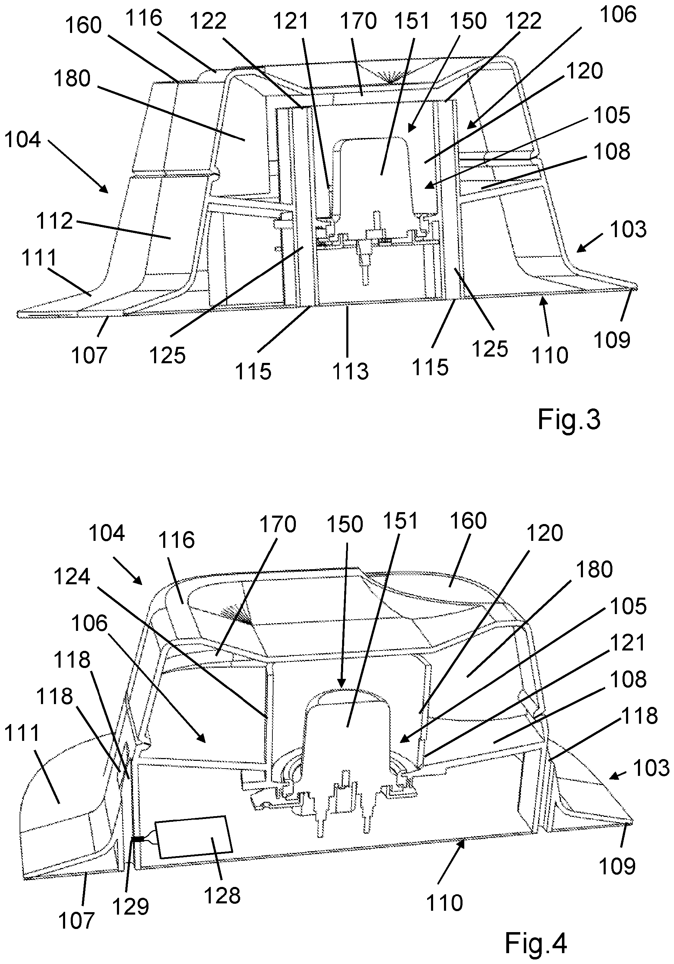

Dans l'exemple de réalisation illustré sur les figures 2 à 4, le réservoir d'eau 106 entoure la chambre de production de vapeur 120. A cet effet une paroi annulaire 124, mieux visible sur la figure 4, entoure la chambre de production de vapeur 120. L'entrée d'alimentation en eau 121 est formée dans la paroi annulaire 124.

La chambre de production de vapeur 120 comporte un dispositif de chauffe 150 pour transformer en vapeur l'eau présente dans la chambre de production de vapeur 120. Dans l'exemple de réalisation illustré sur les figures 2 à 4, le dispositif de chauffe 150 comprend un plot chauffant 151. A titre de variante, le dispositif de chauffe 150 peut notamment comporter un élément chauffant disposé sous une plaque de diffusion de chaleur et/ou dans une plaque de diffusion de chaleur formant au moins une partie du fond de la chambre de production de vapeur 120.

La chambre de production de vapeur 120 est reliée à au moins une sortie de distribution de vapeur 115 ménagée dans une partie inférieure 110 du générateur de vapeur 105. A cet effet, la chambre de production de vapeur 120 communique avec au moins une sortie d'évacuation de vapeur 122 disposée plus haut que l'entrée d'alimentation en eau 121. La chambre de production de vapeur 120 est confinée au-dessus de la ou des sortie(s) d'évacuation de vapeur 122. La ou chaque sortie d'évacuation de vapeur 122 communique par un conduit 125 avec la ou l'une des sortie(s) de distribution de vapeur 115.

Plus particulièrement dans l'exemple de réalisation illustré sur les figures 2 à 4, la chambre de production de vapeur 120 communique avec la ou les sortie(s) d'évacuation de vapeur 122 par une chambre d'expansion de vapeur 170 disposée au-dessus de la chambre de production de vapeur 120. En d'autres termes, ladite chambre d'expansion de vapeur est dépourvue de communication avec l'extérieur au-dessus de ladite au moins une sortie d'évacuation de vapeur 122. Une paroi latérale séparatrice 180 est agencée entre l'orifice de remplissage 160 et la chambre d'expansion de vapeur 170 pour éviter les échappements de vapeur par l'orifice de remplissage 160. A cet effet, la paroi latérale séparatrice 180 s'étend plus bas que la ou les sorties(s) d'évacuation de vapeur 122. En d'autres termes, la paroi latérale séparatrice 180 s'étend en dessous de la ou des sortie(s) d'évacuation de vapeur 122. Plus particulièrement, la paroi latérale séparatrice 180 s'étend plus bas que l'entrée d'alimentation en eau 121. Tel que bien visible sur les figures 2 à 4, la paroi latérale séparatrice 180 s'étend dans le réservoir d'eau 106. En d'autres termes, l'eau peut atteindre les deux faces de la partie inférieure de la paroi latérale séparatrice 180.

Dans l'exemple de réalisation illustré sur les figures 2 à 4, la chambre de production de vapeur 120 présente plusieurs sorties d'évacuation de vapeur 122 disposées plus haut que l'entrée d'alimentation en eau 121 et communiquant par plusieurs conduits 125 avec les sorties de distribution de vapeur 115. Plus particulièrement, les conduits 125 sont ménagés dans la paroi annulaire 124. Deux groupes de trois conduits 125 sont disposés de part et d'autre du plot chauffant 151. Les conduits 125 sont verticaux. A titre de variante les conduits 125 peuvent être descendants sans nécessairement être verticaux. De préférence les conduits 125 sont dépourvus de chicanes. En d'autres termes, les conduits 125 sont descendants de manière continue, sans nécessairement être rectilignes.

Plus particulièrement, le générateur de vapeur 105 présente une surface d'appui annulaire inférieure 109 prévue pour reposer sur le récipient 102.

Le générateur de vapeur 105 présente une paroi inférieure 113 dans laquelle est/sont formée(s) la ou les sorties de distribution de vapeur 115. Tel que visible sur les figures 2 et 3, la ou les sorties de distribution de vapeur 115 est/sont ainsi entourée(s) par la surface d'appui annulaire inférieure 109. La chambre de production de vapeur 120 est agencée dans le générateur de vapeur 105 à distance de la paroi inférieure 113, ce qui permet une plus grande liberté dans la position des sorties de distribution de vapeur 115.

Le générateur de vapeur 105 présente au moins un évent 118 mettant en communication la partie inférieure 110 du générateur de vapeur 105 avec une partie extérieure 111 du générateur de vapeur 105 s'étendant au-dessus de la partie inférieure 110. Ledit au moins un évent 118 est entouré par la surface d'appui annulaire inférieure 109.

Le dispositif de chauffe 150 est piloté par un dispositif de commande 128 comportant un détecteur de vapeur 129 agencé pour détecter un flux de vapeur s'échappant par l'un des évents 118. Le dispositif de commande 128 permet de réduire la puissance de chauffe du dispositif de chauffe 150 lorsque de la vapeur a été détectée par le détecteur de vapeur 129.

Le générateur de vapeur 105 présente une paroi latérale extérieure 112. Le fond 108 du réservoir d'eau 106 relie la paroi latérale extérieure 112 à la paroi annulaire 124. La chambre de production de vapeur 120 est agencée dans le générateur de vapeur 105 à distance de la paroi latérale extérieure 112. Ledit au moins un évent 118 débouche dans la paroi latérale extérieure 112.

Dans l'exemple de réalisation illustré sur les figures 2 à 4, le générateur de vapeur 105 présente plusieurs évents 118 mettant en communication la partie inférieure 110 du générateur de vapeur 105 avec la partie extérieure 111 du générateur de vapeur 105. La partie inférieure 110 forme la paroi inférieure 113. La partie extérieure 111 forme la paroi latérale extérieure 112. Deux groupes de trois évents 118 sont disposés de part et d'autre du réservoir d'eau 106 entourant la chambre de production de vapeur 120.

Dans l'exemple de réalisation illustré sur les figures 2 à 4, le détecteur de vapeur 129 est agencé dans l'un des évents 118. Le détecteur de vapeur 129 est avantageusement formé par une résistance CTN. Le dispositif de commande 128, représenté schématiquement sur la figure 4, comprend un microprocesseur avantageusement agencé à distance de la résistance CTN.

L'accessoire cuiseur vapeur 104 présente une paroi supérieure 116 avantageusement réalisée en matière transparente ou translucide. La paroi supérieure 116 est assemblée avec la paroi latérale extérieure 112, par exemple par clipsage, par collage, par surmoulage, par vissage ou par soudage. La paroi supérieure 116 forme une partie du réservoir d'eau 106. La paroi latérale séparatrice 180 est issue de la paroi supérieure 116. La paroi supérieure 116 forme la partie supérieure de la chambre d'expansion de vapeur 170.

Le cuiseur vapeur électrique 101 illustré sur la figure 2 et l'accessoire cuiseur vapeur 104 illustré sur les figures 2 à 4 fonctionnent et s'utilisent de la manière suivante.

L'utilisateur dispose l'accessoire cuiseur vapeur 104 sur le récipient 102 après avoir disposé les aliments dans le récipient 102. L'utilisateur remplit le réservoir d'eau 106 par l'orifice de remplissage 160. L'eau s'écoule par l'entrée d'alimentation en eau 121 dans la chambre de production de vapeur 120. De préférence, l'utilisateur remplit le réservoir d'eau 106 jusqu'à un niveau suffisamment inférieur aux sorties d'évacuation de vapeur 122, pour éviter que l'eau atteigne les sorties d'évacuation de vapeur 122 et s'écoule par les conduits 125. L'utilisateur met alors en marche le dispositif de chauffe 150. La température de l'eau présente dans la chambre de production de vapeur 120 s'élève jusqu'à ce que de la vapeur soit produite. La vapeur s'élève depuis la chambre de production de vapeur 120 pour atteindre la chambre d'expansion de vapeur 170. La vapeur est alors confinée par la paroi supérieure 116, par la paroi latérale séparatrice 180 et par l'eau présente dans le réservoir d'eau 106. La vapeur s'échappe alors par les sorties d'évacuation de vapeur 122 pour atteindre les sorties de distribution de vapeur 115 en descendant par les conduits 125. La vapeur sortant des sorties de distribution de vapeur 115 se répand dans le récipient 102. L'air présent au-dessus des aliments peut s'échapper par les évents 118. Lorsque les aliments sont saturés en vapeur, la vapeur s'échappe également par les évents 118. La vapeur s'échappant peut alors être détectée par le détecteur de vapeur 129 agencé dans l'un des évents 118. La puissance de chauffe du dispositif de chauffe 150 peut alors être réduite de manière automatique par le dispositif de commande 128.

Si désiré, la chambre de production de vapeur 20, 120 peut comporter plusieurs dispositifs de chauffe. Le dispositif de commande 28, 128 peut alors couper l'alimentation d'au moins un des dispositifs de chauffe, pour réduire la puissance de chauffe. Le détecteur de vapeur 29, 129 et le dispositif de commande peuvent alors par exemple être formés par un interrupteur thermostatique coupant l'alimentation d'au moins un des dispositifs de chauffe lorsque la température détectée dépasse un seuil de température.

Si désiré le générateur de vapeur 105 peut comporter un dispositif de support amovible par rapport à la chambre de production de vapeur 120, de sorte que la chambre de production de vapeur 120 repose sur ledit dispositif de support et que ledit dispositif de support présente au moins une portion de surface d'appui prévue pour reposer sur un récipient. Le dispositif de support peut notamment présenter une configuration annulaire ou une configuration en U. En alternative, le dispositif de support amovible peut notamment appartenir au couvercle 103.

A titre de variante, le détecteur de vapeur 29 ; 129 n'est pas nécessairement formé par un capteur de température tel que par exemple une résistance CTN ou un interrupteur thermostatique, mais peut être de tout type, notamment un capteur de débit ou un capteur d'humidité. La puissance de chauffe du dispositif de chauffe 50 ; 150, peut être réglée par des moyens électroniques. La variation de la puissance de chauffe du dispositif de chauffe 50 ; 150 peut être obtenue par une alternance de périodes de chauffe à pleine puissance et de périodes d'arrêt. Toutefois une simple commutation entre une puissance initiale et une puissance réduite peut suffire.

Dans les exemples de réalisation illustrés, le détecteur de vapeur 29; 129 s'étend à l'intérieur de l'évent 18 ; 118. A titre de variante, le détecteur de vapeur 29; 129 pourrait former une portion de paroi de l'évent 18; 118, notamment lorsque le détecteur est formé par un interrupteur thermostatique.

Dans les exemples de réalisation illustrés, l'évent 18 ; 118 forme un conduit rectiligne ascendant. A titre de variante, l'évent pourrait former un conduit présentant au moins une chicane.

La présente invention n'est nullement limitée aux exemples de réalisation décrits et à leurs variantes, mais englobe de nombreuses modifications dans le cadre des revendications.

## Revendications

1. Accessoire cuiseur vapeur (4 ; 104) pour chauffer et/ou cuire à la vapeur des aliments contenus dans un récipient (2 ; 102), l'accessoire cuiseur vapeur (4; 104) comprenant un générateur de vapeur (5; 105) comportant une chambre de production de vapeur (20 ; 120) reliée à au moins une sortie de distribution de vapeur (15 ; 115) ménagée dans une partie inférieure (10 ; 110) du générateur de vapeur (5 ; 105), la chambre de production de vapeur (20, 120) comportant un dispositif de chauffe (50, 150), **caractérisé en ce que** le dispositif de chauffe (50, 150) est piloté par un dispositif de commande (28 ; 128) comportant un détecteur de vapeur (29 ; 129) agencé pour détecter un flux de vapeur s'échappant par un évent (18; 118) mettant en communication la partie inférieure (10 ; 110) du générateur de vapeur (5 ; 105) avec une partie extérieure (11 ; 111) du générateur de vapeur (5 ; 105), **en ce que** le générateur de vapeur (5 ; 105) présente une surface d'appui annulaire inférieure (9 ; 109) prévue pour reposer sur le récipient (2 ; 102), **en ce que** ladite au moins une sortie de distribution de vapeur (15 ; 115) est entourée par la surface d'appui annulaire inférieure (9 ; 109), et **en ce que** l'évent (18 ; 118) est entouré par la surface d'appui annulaire inférieure (9 ; 109).

2. Accessoire cuiseur vapeur (4 ; 104) selon la revendication 1, **caractérisé en ce que** le détecteur de vapeur (29; 129) s'étend à l'intérieur de l'évent (18 ; 118) et/ou forme une portion de paroi de l'évent (18 ; 118).

3. Accessoire cuiseur vapeur (4 ; 104) selon l'une des revendications 1 ou 2, **caractérisé en ce que** le détecteur de vapeur (29, 129) est formé par une résistance CTN ou par un interrupteur thermostatique.

4. Accessoire cuiseur vapeur (4 ; 104) selon l'une des revendications 1 à 3, **caractérisé en ce que** l'évent (18 ; 118) forme un conduit ascendant.

5. Accessoire cuiseur vapeur (4 ; 104) selon l'une des revendications 1 à 4, **caractérisé en ce que** l'évent (18 ; 118) forme un conduit rectiligne.

6. Accessoire cuiseur vapeur (4 ; 104) selon l'une des revendications 1 à 5, **caractérisé en ce que** l'évent (18 ; 118) forme un conduit dépourvu de chicane.

7. Accessoire cuiseur vapeur (4 ; 104) selon l'une des revendications 1 à 6, **caractérisé en ce que** la partie extérieure (11 ; 111) du générateur de vapeur (5 ; 105) s'étend au-dessus de la partie inférieure (10 ; 110) du générateur de vapeur (5 ; 105).

8. Accessoire cuiseur vapeur (4 ; 4' ; 104) selon l'une des revendications 1 à 7, **caractérisé en ce qu'**il comprend un réservoir d'eau (6 ; 106).

9. Accessoire cuiseur vapeur (4; 4'; 104) selon la revendication 8, **caractérisé en ce que** le réservoir d'eau (6; 106) alimente en eau la chambre de production de vapeur (20 ; 120).

10. Accessoire cuiseur vapeur (4) selon la revendication 9, **caractérisé en ce que** le réservoir d'eau (6) est amovible par rapport au générateur de vapeur (5), et **en ce que** le générateur de vapeur (5) porte le réservoir d'eau (6) amovible.

11. Accessoire cuiseur vapeur (4 ; 104) selon l'une des revendications 1 à 10, **caractérisé en ce que** le générateur de vapeur (5 ; 105) présente une paroi inférieure (13 ; 113) dans laquelle est formée ladite au moins une sortie de distribution de vapeur (15 ; 115) et **en ce que** la chambre de production de vapeur (20; 120) est agencée dans le générateur de vapeur (5 ; 105) à distance de la paroi inférieure (13 ; 113).

12. Accessoire cuiseur vapeur (4 ; 104) selon l'une des revendications 1 à 11, **caractérisé en ce que** le générateur de vapeur (5 ; 105) présente une paroi latérale extérieure (12; 112) et **en ce que** la chambre de production de vapeur (20; 120) est agencée dans le générateur de vapeur (5 ; 105) à distance de la paroi latérale extérieure (12 ; 112).

13. Accessoire cuiseur vapeur (4; 104) selon la revendication 12, **caractérisé en ce que** l'évent (18 ; 118) débouche dans la paroi latérale extérieure (12 ; 112).

14. Cuiseur vapeur électrique (1 ; 101), comportant un récipient (2; 102) pour contenir les aliments à chauffer et/ou à cuire, et un couvercle (3 ; 103) présentant une face inférieure (7 ; 107) prévue pour être disposée sur le récipient (2 ; 102), **caractérisé en ce que** le couvercle (3; 103) comprend un accessoire cuiseur vapeur (4; 104) selon l'une des revendications 1 à 13.

## Patentansprüche

1. Dampfgarer-Zubehör (4; 104) zum Dampferhitzen und/oder -garen von Lebensmitteln, die in einem Behälter (2; 102) enthalten sind, wobei das Dampfgarer-Zubehör (4; 104) einen Dampferzeuger (5; 105) umfasst, der eine Dampferzeugungskammer (20; 120) umfasst, die mit mindestens einem Dampfverteilerauslass (15; 115) verbunden ist, welcher in einem unteren Teil (10; 110) des Dampferzeugers (5; 105) ausgebildet ist, wobei die Dampferzeugungskammer (20, 120) eine Heizvorrichtung (50, 150) umfasst, **dadurch gekennzeichnet, dass** die Heizvorrichtung (50, 150) von einer Steuervorrichtung (28; 128) angesteuert wird, die einen Dampfdetektor (29; 129) umfasst, der so eingerichtet ist, dass er einen Dampfstrom erkennt, der durch eine Öffnung (18; 118) entweicht, die den unteren Teil (10; 110) des Dampferzeugers (5; 105) mit einem äußeren Teil (11; 111) des Dampferzeugers (5; 105) in Kommunikation setzt, dadurch, dass der Dampferzeuger (5; 105) eine ringförmige untere Auflagefläche (9; 109) aufweist, die dafür vorgesehen ist, auf dem Behälter (2; 102) aufzuliegen, dadurch, dass der mindestens eine Dampfverteilerauslass (15; 115) von der ringförmigen unteren Auflagefläche (9; 109) umgeben ist, und dadurch, dass die Öffnung (18; 118) von der ringförmigen unteren Auflagefläche (9; 109) umgeben ist.

2. Dampfgarer-Zubehör (4; 104) nach Anspruch 1, **dadurch gekennzeichnet, dass** sich der Dampfdetektor (29; 129) im Inneren der Öffnung (18; 118) erstreckt und/oder einen Wandabschnitt der Öffnung (18; 118) bildet.

3. Dampfgarer-Zubehör (4; 104) nach einem der Ansprüche 1 oder 2, **dadurch gekennzeichnet, dass** der Dampfdetektor (29, 129) von einem NTC-Widerstand oder von einem Thermostatschalter gebildet wird.

4. Dampfgarer-Zubehör (4; 104) nach einem der Ansprüche 1 bis 3, **dadurch gekennzeichnet, dass** die Öffnung (18; 118) einen aufsteigenden Kanal bildet.

5. Dampfgarer-Zubehör (4; 104) nach einem der Ansprüche 1 bis 4, **dadurch gekennzeichnet, dass** die Öffnung (18; 118) einen geraden Kanal bildet.

6. Dampfgarer-Zubehör (4; 104) nach einem der Ansprüche 1 bis 5, **dadurch gekennzeichnet, dass** die Öffnung (18; 118) einen schikanenfreien Kanal bildet.

7. Dampfgarer-Zubehör (4; 104) nach einem der Ansprüche 1 bis 6, **dadurch gekennzeichnet, dass** sich der äußere Teil (11; 111) des Dampferzeugers (5; 105) über dem unteren Teil (10; 110) des Dampferzeugers (5; 105) erstreckt.

8. Dampfgarer-Zubehör (4; 4'; 104) nach einem der Ansprüche 1 bis 7, **dadurch gekennzeichnet, dass** es einen Wassertank (6; 106) umfasst.

9. Dampfgarer-Zubehör (4; 4'; 104) nach Anspruch 8, **dadurch gekennzeichnet, dass** der Wassertank (6; 106) die Dampferzeugungskammer (20; 120) mit Wasser speist.

10. Dampfgarer-Zubehör (4) nach Anspruch 9, **dadurch gekennzeichnet, dass** der Wassertank (6) in Bezug auf den Dampferzeuger (5) abnehmbar ist, und dadurch, dass der Dampferzeuger (5) den abnehmbaren Wassertank (6) trägt.

11. Dampfgarer-Zubehör (4; 104) nach einem der Ansprüche 1 bis 10, **dadurch gekennzeichnet, dass** der Dampferzeuger (5; 105) eine untere Wand (13; 113) aufweist, in der der mindestens eine Dampfverteilerauslass (15; 115) gebildet ist, und dadurch, dass die Dampferzeugungskammer (20; 120) im Dampferzeuger (5; 105) in Abstand von der unteren Wand (13; 113) eingerichtet ist.

12. Dampfgarer-Zubehör (4; 104) nach einem der Ansprüche 1 bis 11, **dadurch gekennzeichnet, dass** der Dampferzeuger (5; 105) eine äußere Seitenwand (12; 112) aufweist, und dadurch, dass die Dampferzeugungskammer (20; 120) im Dampferzeuger (5; 105) in Abstand von der äußeren Seitenwand (12; 112) eingerichtet ist.

13. Dampfgarer-Zubehör (4; 104) nach Anspruch 12, **dadurch gekennzeichnet, dass** die Öffnung (18; 118) in die äußere Seitenwand (12; 112) mündet.

14. Elektrischer Dampfgarer (1; 101), der einen Behälter (2; 102) zum Aufnehmen der Lebensmittel, die erhitzt und/oder gegart werden sollen, und einen Deckel (3; 103) umfasst, der eine untere Seite (7; 107) aufweist, die dazu vorgesehen ist, auf dem Behälter (2; 102) angeordnet zu werden, **dadurch gekennzeichnet, dass** der Deckel (3; 103) ein Dampfgarer-Zubehör (4; 104) nach einem der Ansprüche 1 bis 13 umfasst.

## Claims

1. Steamer accessory (4; 104) for steam-heating and/or steam-cooking food in a container (2; 102), the steamer accessory (4; 104) comprising a steam generator (5; 105) comprising a steam production chamber (20; 120) connected to at least one steam distribution outlet (15; 115) provided in a lower part (10; 110) of the steam generator (5; 105), the steam production chamber (20, 120) comprising a heating device (50, 150), **characterised in that** the heating device (50, 150) is controlled by a control device (28; 128) comprising a steam detector (29; 129) arranged to detect a flow of steam escaping through a vent (18; 118) that brings the lower part (10; 110) of the steam generator (5; 105) into communication with an outer part (11; 111) of the steam generator (5; 105), **in that** the steam generator (5; 105) has a lower annular supporting surface (9; 109) provided to rest on the container (2; 102), **in that** said at least one steam distribution outlet (15; 115) is surrounded by the lower annular supporting surface (9; 109), and **in that** the vent (18; 118) is surrounded by the lower annular supporting surface (9; 109).

2. Steamer accessory (4; 104) according to claim 1, **characterised in that** the steam detector (29; 129) extends inside the vent (18; 118) and/or forms a wall portion of the vent (18; 118).

3. Steamer accessory (4; 104) according to one of claims 1 or 2, **characterised in that** the steam detector (29, 129) is formed by a CTN resistance or by a thermostatic switch.

4. Steamer accessory (4; 104) according to one of claims 1 to 3, **characterised in that** the vent (18; 118) forms an ascending pipe.

5. Steamer accessory (4; 104) according to one of claims 1 to 4, **characterised in that** the vent (18; 118) forms a rectilinear pipe.

6. Steamer accessory (4; 104) according to one of claims 1 to 5, **characterised in that** the vent (18; 118) forms a pipe with no chicane.

7. Steamer accessory (4; 104) according to one of claims 1 to 6, **characterised in that** the outer part (11; 111) of the steam generator (5; 105) extends above the lower part (10; 110) of the steam generator (5; 105).

8. Steamer accessory (4; 4'; 104) according to one of claims 1 to 7, **characterised in that** it comprises a water tank (6; 106).

9. Steamer accessory (4; 4'; 104) according to claim 8, **characterised in that** the water tank (6; 106) supplies the steam production chamber (20; 120) with water.

10. Steamer accessory (4) according to claim 9, **characterised in that** the water tank (6) is removable with respect to the steam generator (5), and **in that** the steam generator (5) carries the removable water tank (6).

11. Steamer accessory (4; 104) according to one of claims 1 to 10, **characterised in that** the steam generator (5; 105) has a lower wall (13; 113) wherein is formed said at least one steam distribution outlet (15; 115) and **in that** the steam production chamber (20; 120) is arranged in the steam generator (5; 105) at a distance from the lower wall (13; 113).

12. Steamer accessory (4; 104) according to one of claims 1 to 11, **characterised in that** the steam generator (5; 105) has an outer side wall (12; 112) and **in that** the steam production chamber (20; 120) is arranged in the steam generator (5; 105) at a distance from the outer side wall (12; 112).

13. Steamer accessory (4; 104) according to claim 12, **characterised in that** the vent (18; 118) opens into the outer side wall (12; 112).

14. Electric steamer (1; 101) comprising a container (2; 102) for housing the food to be heated and/or cooked, and a cover (3; 103) having a lower face (7; 107) provided to be disposed on the container (2; 102), **characterised in that** the cover (3; 103) comprises a steamer accessory (4; 104) according to one of claims 1 to 13.
